# EUROPEAN PATENT SPECIFICATION

(11) **EP 3 301 170 B1**
(45) Date of publication and mention of the grant of the patent: **02.10.2019**
(21) Application number: 16425093.8
(22) Date of filing: 30.09.2016
(51) Int. Cl.: C12G 3/07, C12J 1/00, B27M 1/06, B27H 5/04, B27H 1/00, B27H 5/00, B27H 5/08, C12H 1/22

(54) **DEVICE AND METHOD OF HEATING/BENDING/FORMING AND HEATING/TOASTING BARRELS, CASKS, VATS AND THE LIKE FOR REFINING, CONDITIONING AND AGEING ALCOHOLIC BEVERAGES AND OTHER FOODS**
VORRICHTUNG UND VERFAHREN ZUM HEIZEN/BIEGEN/FORMEN UND HEIZEN/RÖSTEN VON FÄSSERN, BEHÄLTERN, BOTTICHEN UND DERGLEICHEN ZUR VERFEINERUNG, KONDITIONIERUNG UND ALTERUNG VON ALKOHOLISCHEN GETRÄNKEN UND ANDEREN NAHRUNGSMITTELN
DISPOSITIF ET PROCÉDÉ DE CHAUFFAGE/PLIAGE/FORMAGE ET DE CHAUFFAGE/BRUNISSAGE DE BARILS, FÛTS, CUVES ET PRODUITS ANALOGUES DE RAFFINAGE, CONDITIONNEMENT ET VIEILLISSEMENT DES BOISSONS ALCOOLISÉES ET AUTRES DENRÉES ALIMENTAIRES

(43) Date of publication of application: 04.04.2018
(73) Proprietor: G. & P. Garbellotto S.p.A., 31015 Conegliano, Treviso (IT)
(72) Inventor: Battistutta, Franco, I-31015 Conegliano, Treviso (IT); Tonizzo, Andrea, I-31015 Conegliano, Treviso (IT)
(74) Representative: Chimini, Francesco

(56) References cited:
- WO-A1-2009/062245
- FR-A1- 2 775 212
- US-A- 666 639
- US-A- 1 928 113
- US-A- 5 630 265
- US-A1- 2009 136 885

## Description

### FIELD OF APPLICATION

The present invention relates to a device and method of heating/bending/forming and heating/toasting barrels, casks, vats and the like for refining, conditioning and ageing alcoholic beverages and other foods.

### STATE OF THE ART

As is known, in the field of alcoholic beverages and wine in particular, but also in general of foods, the phase of refining, conditioning and ageing alcoholic beverages, typically, but not exclusively wine, in special barrels, casks, vats and the like is increasingly requested. The wood is in fact able to transfer by contact to the alcoholic drink (and in general to the food) a highly complex aromatic content which enhances the final product. The aromatic components that wood is able to transfer to the beverage are varied and depend on many factors, the first being the type of wood used to make the container/barrel in which the drink is contained, as well as, for example, the length of contact, namely the length of ageing, the ratio of the volume and contact surface area of the container and the beverage, and so forth. It is also possible to change, at least partially, such aromatic content enriching it with toasting components (often referred to as tertiary aromas) obtained by toasting the inner wall of the container destined to come into direct contact with the food.

Toasting the wood is a very delicate and complex phase and is one of the most important steps in making a barrel for ageing.

In particular, the construction of the barrel goes through several steps that can be summarised as follows:
selection of the wooden boards,
shaping of the staves,
assembly of the barrel with arrangement of the staves in a circle
heating and bending to achieve the desired shape,
heating and toasting,
closure of the barrel with the bottom.

The phases relevant to this invention are those of heating, bending/forming and heating/toasting.

The step of bending/forming the wood plays an important role in giving the barrel its distinctive curved shape and ensuring the mechanic and hydraulic resistance of the finished product. Clearly the bending of hardwood boards of a thickness of 25-100 mm is a very delicate step which can cause the board to break.

This step is performed by heating the circle of staves of the barrel in order to exceed, throughout the thickness of the staves, the temperature of 40-45°C (which corresponds to the glass transition temperature of cellulose, the main constituent of said stave). At the same time bending/forming is performed in stages to allow the wood to slowly adapt and to stabilize in the bent form, this too aided by the heat.

The heating step is traditionally performed by lighting a fire, confined in a brazier, fed for example with production scrap of the same wood forming the barrel. Clearly this technique requires continuous monitoring by an operator to avoid high temperature swings or superficial burning of the wood. Over time in the art other techniques have been developed, based on alternative and adjustable heating systems such as gas flames, electric heaters, infrared lamps and lately the use of chips or wood pellets. As an alternative, techniques have also been developed which contemplate the use of water both in liquid form (immersion) and in steam form (entire barrel in chamber with flowing or pressurised steam).

These latter options provide greater uniformity of heating and machinability of the wood but can lead to major losses of the extractable fraction (aromas and tannins) with loss of quality of the finished product. In addition, for large barrels it becomes difficult if not impossible to move or contain them in closed chambers.

During this step, or subsequently, bending is performed with the help of jaws, powered by jacks and levers, which tighten the barrel while keeping the centre fixed or with the use of tie-rods (metal cables that wrap around the base of the barrel) moved by jacks; in the latter case the centre of the barrel migrates, following the direction of pulling. The fact that the centre of the barrel is not fixed involves having to move the heat source to keep it equidistant from the inner surface of the barrel. The system with pulling cables proves more flexible in relation to the various diameters of the barrels and to the shape of the barrel itself (circular or elliptical). By contrast the jaw system is preferable for the production of a limited number of shapes and sizes of barrels.

In part overlapping such step or, possibly, subsequently, is the toasting phase which defines the characteristics of the finished barrel in relation to the type of aromas to be obtained. At this stage accurate temperature control becomes crucial to make the barrel characteristics repeatable. In manufacturing, the terms light, medium and strong toasting with possible intermediate classes, are used.

From the above description it is clear how control of the temperature during toasting is essential in order to achieve a toasting over the entire inner side wall of the barrel; in fact, even a temperature variation of about 5% can result in uneven heating and toasting determining a highly variable quality of the finished product.

Temperature control during toasting is therefore essential; the problem is accentuated when the barrel is not toasted, as seen after its forming, but during the bending of the staves with tie rods. In fact, the geometric centre of the barrel being formed changes constantly in relation to the geometric centre of the brazier, leading to a variation of the distances between the heat source (brazier) and inner side wall to be bent. This change causes an unevenness of the temperature on the inner side wall of the barrel prejudicing correct bending and/or causing unwanted toasting.

Besides, such off-centredness is very difficult to detect because the barrel itself obstructs the view from the outside of an operator monitoring the bending and/or toasting process.

To avoid this kind of problem solutions have been developed that provide for the toasting of a barrel already formed, therefore having a fixed centre not variable over time. This way, however, the solution is not very versatile in that it does not provide for possible contemporary bending and toasting. If the heating/bending and the heating/toasting are performed separately, the total time of manufacture/toasting the barrel increases since it is given by the sum of the time of forming and of toasting the barrel. Accurate temperature control of the side wall inside the barrel is essential since it may be necessary to perform the toasting at relatively low temperatures for a long time (so as to have a strong penetration of heat inside the staves) or at higher temperatures for a shorter time (strong surface treatment of the wood). In other words, the time and temperature are a function of the thickness of the staves constituting the barrel and of the desired features to be obtained.

In light of the above, it is clear that the known solutions do not ensure optimal bending/toasting, given the variations in the thickness of the wood constituting the staves and, at the same time, a reduction of manufacturing times and costs of a toasted barrel for ageing drinks or other foods. Such solutions are disclosed, for example, in US 2009/136885A1, US 1928113 A and FR 2775212 A1.

### PRESENTATION OF THE INVENTION

The purpose of the present invention is to make a device and/or method which overcome the drawbacks mentioned with reference to the prior art.

Such drawbacks are resolved by a device according to claim 1 and by means of a method according to claim 17.

Other embodiments of the present invention are described in the subsequent claims.

### DESCRIPTION OF THE DRAWINGS

Further characteristics and advantages of the present invention will be more clearly comprehensible from the description given below of a preferred and nonlimiting example of embodiment, wherein:
Figure 1 is a schematic plan view of a heating/bending/forming and heating/toasting device of barrels, casks, vats and the like according to one embodiment of the present invention;
Figure 2 is a side view, in partial cross-section of the heating/bending/forming and heating/toasting device of barrels, casks, vats and the like in figure 1;
Figure 3-4 are side views, in partial cross-section of a heating/bending/forming and heating/toasting device of barrels, casks, vats and the like according to further embodiments of the present invention;

### DETAILED DESCRIPTION

With reference to the aforementioned figures, reference numeral 4 globally denotes a heating/bending/forming and heating/toasting device of wooden containers 8 for the refining, conditioning and ageing of foodstuffs, such as alcohol. Typically, but not exclusively, the invention applies to the heating/bending/forming and heating/toasting of barrels, casks, vats and the like 10 for ageing wine. Obviously the invention applies to the refining, conditioning and ageing of foods in general, not necessarily liquids, such as solid foods, and not necessarily alcoholic beverages, such as vinegar and the like.

Said heating/bending/forming and heating/toasting device of barrels, casks, vats and the like 10 comprises heating/toasting means 12, typically a brazier, suitable to generate heat to produce heating and/or toasting of an inner side wall 16 of a barrel, cask, vat or the like 10, said barrel, cask, vat or the like 10 comprising a plurality of staves 20 arranged side by side along the perimeter with each other to form a polyline closed at a first longitudinal end thereof 24. Typically said polyline is a circle. The heating/toasting means 12 typically comprise a brazier which can be fed with wood, pellets and the like, gas or other sources of heat.

Preferably, the brazier has an axial symmetric shape so as to provide even and symmetrical heating and therefore toasting on said inner side wall 16.

The heating/bending/forming and heating/toasting device 4 further comprises bending/forming means 28 of said staves 20 suitable to grasp free ends 36 of said staves 20 opposite said first longitudinal ends 24, and to pull the staves 20 towards a central axis of symmetry S-S of the barrel, cask, vat or the like 10. The free ends 36 are opposite the first longitudinal end 24 along a main axis of longitudinal extension of the staves 20.

For example, said bending/forming means 28 comprise ropes, preferably metal, which circumferentially enclose the staves 20 from the side of the free ends 36 so as to close them towards the inside of the barrel, cask, vat or the like 10, i.e. towards the central axis of symmetry S-S. The bending/forming means 28 comprise appropriate motor means for tensioning for example the ropes, so as to bend the staves 20 as required.

Of course, for the purpose of the present invention other bending/forming means 28 may be used.

Advantageously, the heating/bending/forming and heating/toasting means 4 comprise centering means 40 operatively connected to the heating/toasting means 12 and suitable to be operatively connected to the staves of the barrel, cask or the like 10, on the side of the free ends 36 of the staves 20 opposite the first longitudinal ends 24.

Advantageously, said centering means 40 move the heating/toasting means 12 to said central axis of symmetry S-S of the barrel, cask, vat and the like 10.

In particular, this means that thanks to the centering means the central axis of symmetry S-S of the barrel, cask, vat or the like 10 tends to coincide with an axis of symmetry of the heating/toasting means 12, i.e. of the brazier.

According to a possible embodiment, the centering means 40 comprise spacers 44 that guarantee the same distance D between an inner side wall 16 of the staves 20 facing the heating/toasting means 12 and the heating/toasting means 12 themselves. The term same distance D means that thanks to the spacers 44 the heating/toasting means 12 are placed equidistant from the inner side wall 16 of all the staves 20 so as to heat and toast the staves evenly and continuously. In other words, thanks to the spacers 44, the heating/toasting means 12 are always placed in the theoretical centre, i.e. along the central axis of symmetry S-S of the barrel, cask, vat and the like 10.

According to one embodiment, the spacers 44 are adjustable so as to follow the deformations of the staves 20 during the bending thereof, continually bringing the heating/toasting means 12 to said central axis of symmetry S-S of the barrel, cask, vat or the like 10.

According to one embodiment, the spacers 44 comprise elastic portions 48 suitable to adapt to the bending/deformation of the staves 20 so as to modify the distance between the staves 20 and the heating/toasting means 12, ensuring the positioning of the heating /toasting means 12 at said central axis of symmetry S-S of the barrel, cask, vat or the like 10.

For example, the elastic portions 48 may comprise springs and/or retractable portions comprising a sheath worn on a corresponding stem, so as to lengthen or shorten during the deformation of the staves 20.

According to one possible embodiment, the spacers 44 are configured to be placed between the heating/toasting means 12 and the inner side wall 16 of the staves 20 facing the heating/toasting means 12.

According to a further embodiment the spacers 44 are placed on the side of an outer side wall 52 of the staves 20, opposite the heating/toasting means 12, and are operatively connected to the heating/toasting means 12.

The connection between the spacers 44 and the staves 20 may be made, for example, through the use of brackets 56 hooked to a lower edge 60 of the staves on the side of the free ends 36.

Preferably the brackets 56 hook to said lower edge 60 so as to realize an undercut in both directions, away from and towards the central axis of symmetry S-S, so to follow every movement of the staves 20, both in expansion and contraction, under the effect of the bending/forming means 28.

According to a further embodiment, said brackets 56 are fixed/hooked to the outer side wall 52 of the staves 20.

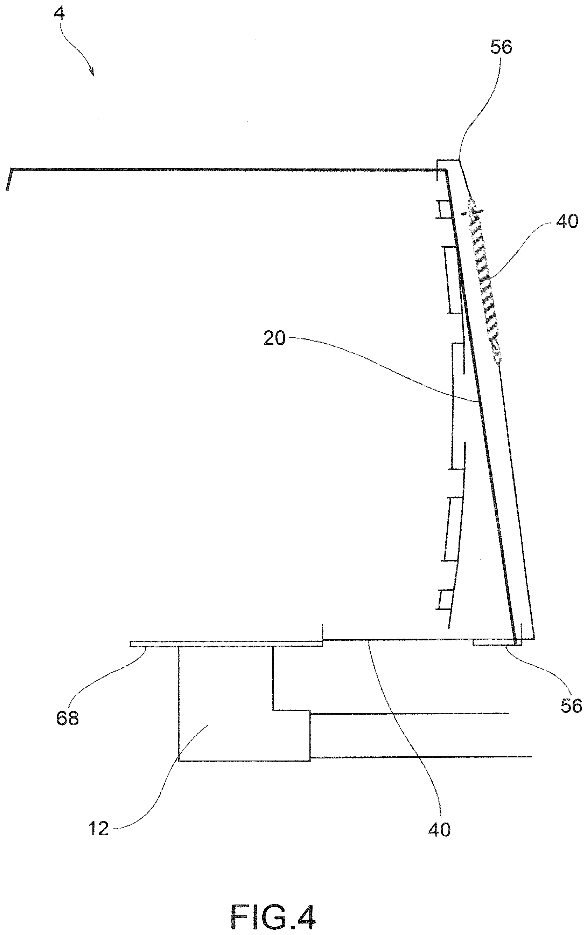

According to a preferred embodiment, the heating/toasting means 12 are mobile so as to adapt to the deformation of the staves 20. For example (figure 4), it is possible to provide for hooking the brackets 56 also to the first longitudinal ends 24, by means of a rope attached in turn to the heating/toasting means 12.

For example, the heating/toasting means 12 are provided with support wheels on a support plane, so that they can be dragged under the thrust of the centring means 40.

According to one embodiment, the spacers 44 comprise springs and/or adjustable pistons suitable to ensure the positioning of the heating/toasting means 12 at said central axis of symmetry S-S of the barrel, cask, vat or the like 10.

According to one possible embodiment, the centering means 40 comprise at least three spacers 44 placed equidistant at angles of 120° to each other.

According to one embodiment, the device 4 of the present invention comprises at least one temperature sensor 64, integral with the heating/toasting means 12, said temperature sensor 64 being directed towards an inner side wall 16 of the associable staves 20 so as to measure the surface temperature of said inner side wall 16 of the staves 20 at a distance.

Preferably, said temperature sensor 64 is an infrared temperature sensor, so as to be able to measure the temperature of the staves 20 remotely.

For example, the heating/toasting means 12 comprise a base 68 above which the heat source for heating/toasting the barrel, cask, vat or the like propagates, for example extending a flame; the temperature sensor 64 is placed below the base 68 and integral therewith.

Preferably said base 68 is provided with at least one window 72 at least partially aligned with said temperature sensor 64 to allow the crossing of the base 68 by a beam of infrared rays emitted from the inner side wall 16 of the staves 20 remotely striking the temperature sensor 64.

Preferably, the temperature sensor 64 is associated with the heating/toasting means 12 by adjustable support means 76, so as to be able to vary the inclination of the temperature sensor 64 to strike appropriate portions of the staves 20.

The heating/bending/forming and heating/toasting method of barrels, casks, vats or the like according to the present invention will now be described.

In particular said method of heating/bending/forming and heating/toasting barrels, casks, vats or the like comprises the steps of:
- providing a wooden container for ageing alcoholic drinks, such as a barrel, cask, vat or the like 10, said container comprising a plurality of staves 20 arranged side by side along the perimeter with each other to form a polyline closed at a first longitudinal end thereof 24,
- providing heating/toasting means 12 (brazier) suitable to generate a source of heat to produce a heating of an inner side wall 16 of said staves 20,
- placing the container 10 above the heating/ toasting means 12 so as to have the closed polyline on the opposite side to the heating/toasting means 12 and free ends 36 of the staves 20 in the vicinity of the heating toasting means 12,
- providing bending/forming means 28 of said staves 20, which interface with the free ends 36 of said staves 20 opposite said first longitudinal ends 24, said bending/forming means 28 pulling the staves 20 towards a central axis of symmetry S-S of the barrel, cask, vat or the like 10,
- providing centering means 40 operatively connected to the heating/toasting means 12 and to the staves 20 of the barrel, cask, vat or the like 10, on the side of the second longitudinal or free ends 36 of the staves 20 opposite, along a longitudinal extension axis, the first longitudinal ends 24,
- said centering means 40 comprise spacers 44 that guarantee the same distance between an inner side wall 16 of the staves 20 and the heating/toasting means 12,
- arranging said spacers 44 so as to follow the deformations of the staves 20 during the bending thereof, continually bringing the heating/toasting means 12 to said central axis of symmetry S-S of the barrel, cask, vat or the like 10.

According to one embodiment, the method further comprises the steps of:
- providing at least one temperature sensor 64, integral with the heating/ toasting means 12, movable with these, during the bending and heating/toasting step of the staves 20. Said temperature sensor 64 is connected to the heating control and process control systems.
- directing said temperature sensor 64 towards a side wall 16 of the associated staves 20 in order to measure the surface temperature of the inner side wall 16 of the staves 20 at a distance.

Preferably , the method of heating/bending/forming and heating/toasting barrels, casks, vats or the like according to the invention also comprises the step of associating the temperature sensor 64 with the heating/toasting means 12 by adjustable support means 76, so as to be able to vary the inclination of the temperature sensor 64 to strike appropriate portions of the staves 20.

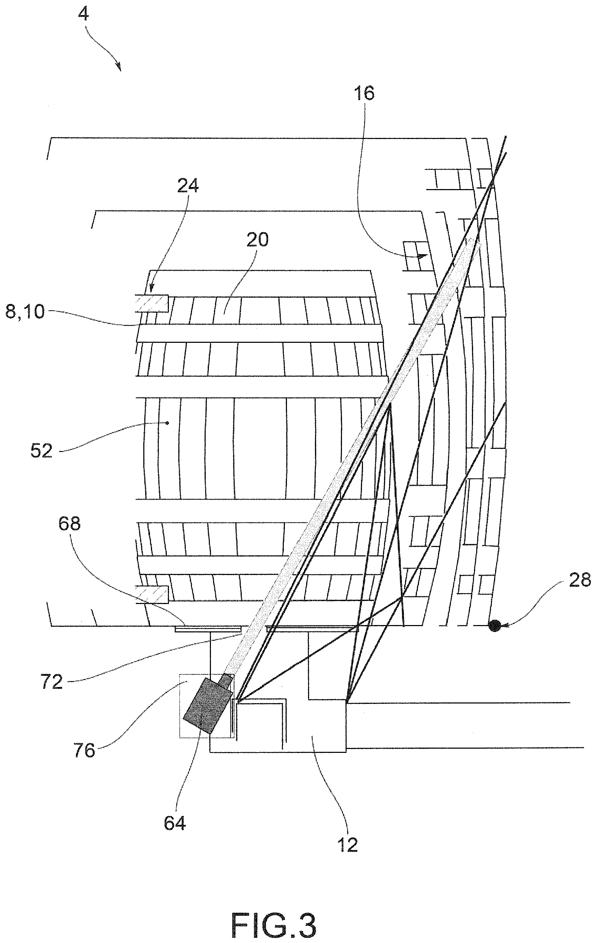

In particular, an example of variation of the inclination of the temperature sensor 64, thanks to the adjustable support means 76, depending on the different dimensions of the barrel, cask, vat and the like is shown schematically in figure 3.

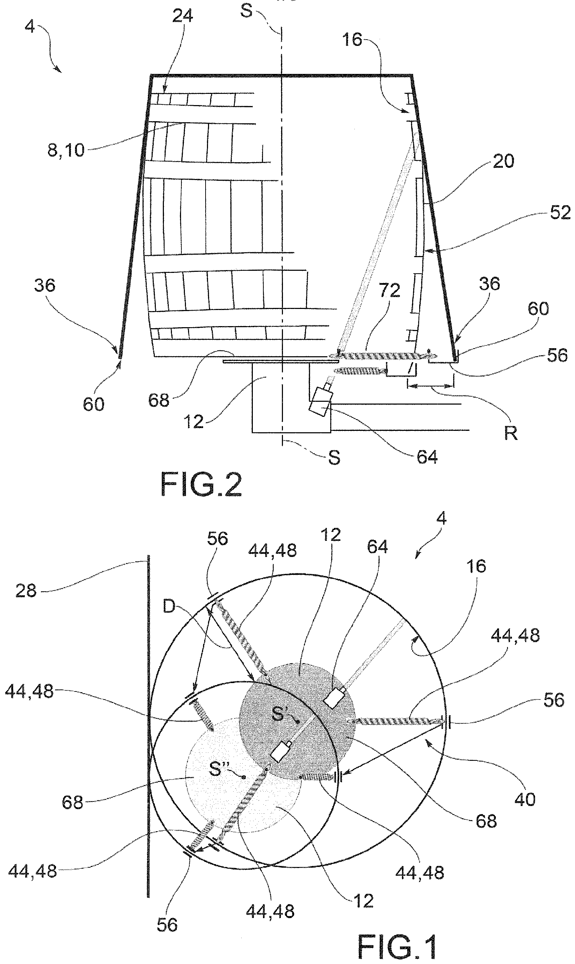

Figures 1 and 2 instead show the change of curvature of the staves 20 as shown by the radial stroke R between the initial bending step and the final bending step.

Moreover, figure 1 shows the magnitude of the migration of the central axis of symmetry S-S from the initial bending step, highlighted by the reference letter S', to the final bending step, highlighted by the reference letter S". This migration is very evident and represents very clearly the geometric variation of the barrel, cask, vat or the like 10, on the side of the free ends 36 of the staves 20, at the initial step, when the barrel, cask, vat and the like 10 presents the maximum diameter and at the final bending step, when the barrel, cask, vat or the like 10 presents the minimum diameter.

As may be appreciated from the description, the device and method of the present invention make it possible to overcome the drawbacks of the prior art.

In particular, the solution permits the heating/bending/forming and heating/toasting steps of the barrels, casks, vats or the like to be performed at the same time, so as not to increase the production cost and time of the barrels, casks, vats or the like.

Advantageously, the device is provided with a self-centering system in bending/forming/toasting, which makes it possible to continually centre the brazier always placing it in the geometric centre of the barrel, cask, vat or the like during the contingent bending step.

Any alteration of the geometry of the barrel, cask, vat or the like in bending/forming is detected by the centring system which continuously aligns the brazier in the geometric centre of the barrel, cask, vat or the like gradually being formed. The brazier is advantageously movable under the guidance/thrust of the centering system.

In addition, the device advantageously provides for control of the temperature reached on the inner side wall of the barrel, cask, vat or the like by means of an appropriate temperature sensor that provides a signal which can modify the process parameters.

In particular, the positioning of the temperature sensor under the brazier, and integrally therewith determines a number of advantages.

For example, it avoids the constant centering of the temperature detection system depending on the size of the barrel, cask, vat or the like in the heating/bending/toasting step thanks to the fact that the detector is placed under the plane of the brazier with an inclination such as to permit a reading which is not affected by the naked flame and at the same time is correct for different sizes of barrels, casks, vats or the like.

Moreover, thanks to the fact that the temperature sensor is integral with the brazier, the movements of the brazier do not change the reading conditions.

In addition it makes for a greater ease of movement of the barrels, casks, vats and the like in production since there are no external obstructions due to the positioning of sensors in the area above the work surface, as occurs in the solutions of the prior art. Said obstructions are especially critical for barrels, casks, vats and the like of medium-large size and difficult to handle.

Furthermore, the provision of a single inclination of the temperature sensor, and in any case adjustable, provides extreme versatility for making format changes on the same heating-bending-toasting workstation.

Overall, the present invention enables the migration of the brazier fire point and therefore the conservation of equidistance of the brazier with respect to the inner surface of the barrel, cask, vat or the like. Such equidistance ensures a uniform heating and thus toasting of the entire inner side surface of the barrel, cask, vat or the like.

Therefore, the heating/toasting means, such as the burner, are fitted with wheels and integrated with the infrared temperature sensor/measuring device capable of reading an area representative of the temperature inside the barrel, cask, vat or the like, and with a dragging system of the brazier, achieved by centering means, in order to maintain the centering of the same in relation to the migration of the centre of the barrel, cask, vat or the like by tensioning of the cables used for bending the staves.

With the present invention it is possible to obtain an extreme versatility with respect to the size of the barrel, cask, vat or the like which can be highly variable according to the demands of users: ranging from an approximately 225-litre barrel to over 100 hectolitres.

Furthermore the creation of an integrated monobloc is achieved comprising the heating system, monitoring and management of temperatures and migration of the heating point utilisable for barrels, casks, vats or the like of different formats without changing the settings, alignments or other features: this way an extreme versatility is achieved for use on wood containers of different shapes and sizes.

## Claims

1. Heating/bending/forming and heating/toasting device of barrels, casks, vats and the like (4) comprising:
- heating/toasting means (12) suitable to generate heat to produce the heating and/or toasting of an inner side wall (16) of a wooden container for ageing food substances, such as a barrel, cask, vat or the like (10), said container comprising a plurality of staves (20) arranged side by side along the perimeter with each other to form a polyline closed at a first longitudinal end thereof (24),
bending/forming means (28) of said staves (20) suitable to grasp free ends (36) of said staves (20) opposite said first longitudinal ends (24), said bending/forming means (28) pulling the staves (20) towards a central axis of symmetry (S-S) of the barrel, cask, vat or the like (10). **characterised in that**
- the device (4) comprises centering means (40) operatively connected to the heating/toasting means (12) and suitable to be operatively connected to the staves (20) of the barrel, cask, vat or the like (10), on the side of the free ends (36) of the staves (20) opposite, along a longitudinal extension axis, the first longitudinal ends (24),
- wherein said centering means (40) move the heating /toasting means (12) to said central axis of symmetry (S-S) of the barrel, cask, vat or the like (10),
wherein the device comprises at least one temperature sensor (64), integral with the heating/toasting means (12), said temperature sensor (64) being directed towards a side wall (16) of the associated staves (20) in order to measure the surface temperature of the inner side wall (16) of the staves (20) at a distance.

2. Heating/bending/forming and heating/toasting device of barrels, casks, vats or the like (4) according to claim 1, wherein the centering means (40) comprise spacers (44) that guarantee the same distance between an inner side wall (16) of the staves (20), facing the heating/toasting means (12) and the heating/toasting means (12) themselves.

3. Heating/bending/forming and heating/toasting device of barrels, casks, vats or the like (4) according to claim 2, wherein said spacers (44)are adjustable so as to follow the deformations of the staves (20) during bending thereof, continually bringing the heating/toasting means (12) to said central axis of symmetry (S-S) of the barrel, cask, vat or the like (10).

4. Heating/bending/forming and heating/toasting device of barrels, casks, vats or the like (4) according to claim 2 or 3, wherein said spacers (44) comprise elastic portions (48) suitable to adapt to the bending/deformation of the staves (20) so as to modify the distance between the staves (20) and the heating/toasting means (12), ensuring the positioning of the heating /toasting means (12) at said central axis of symmetry (S-S) of the barrel, cask, vat or the like (10).

5. Heating/bending/forming and heating/toasting device of barrels, casks, vats or the like (4) according to claim 2, 3 or 4, wherein the spacers (44) are configured to be placed between the heating/toasting means (12) and an inner side wall (16) of the staves (20) facing the heating/toasting means (12).

6. Heating/bending/forming and heating/toasting device of barrels, casks, vats or the like (4) according to claim 2, 3 or 4, wherein the spacers (44) are placed on the side of an outer side wall (52) of the staves (20), opposite the heating/toasting means (12), and are operatively connected to the heating/toasting means (12).

7. Heating/bending/forming and heating/toasting device of barrels, casks, vats or the like (4) according to any of the claims from 2 to 6, wherein a connection between the spacers (44) and the staves (20) is made through the use of brackets (56) hooked to a lower edge (60) of the staves (20) on the side of the free ends (36) of the staves (20), wherein said brackets (56) hook to said lower edge (60) so as to realize an undercut in both directions, away from and towards the central axis of symmetry (S-S) of the barrel, cask, vat or the like (10), so to follow every movement of the staves (20), both in expansion and contraction, under the effect of the bending/forming means (28) .

8. Heating/bending/forming and heating/toasting device of barrels, casks, vats or the like (4) according to any of the claims from 2 to 6, wherein a connection between the spacers (44) and the staves (20) is made through the use of brackets (56) hooked/attached at an outer side wall (52) to the upper edge (24) of the staves (20), so to follow every movement of the staves (20), both in expansion and contraction, under the effect of the bending/forming means (28).

9. Heating/bending/forming and heating/toasting device of barrels, casks, vats or the like (4) according to any of the preceding claims, wherein the heating/toasting means (12) are mobile so as to adapt to the deformation of the staves (20).

10. Heating/bending/forming and heating/toasting device of barrels, casks, vats or the like (4) according to claim 9, wherein the heating/toasting means (12) are provided with support wheels on a support plane, so that they can be dragged under the thrust of the centring means (40).

11. Heating/bending/forming and heating/toasting device of barrels, casks, vats or the like (4) according to any of the claims from 2 to 10, wherein said spacers (44) comprise springs and/or adjustable pistons suitable to ensure the positioning of the heating/toasting means (12) at said central axis of symmetry (S-S) of the barrel, cask, vat or the like (10).

12. Heating/bending/forming and heating/toasting device of barrels, casks, vats or the like (4) according to any of the claims from 2 to 11, wherein the centering means (40) comprise at least three spacers (44) placed equidistant at angles of 120° to each other.

13. Heating/bending/forming and heating/toasting device of barrels, casks, vats or the like (4) according to any one of preceding claims, wherein said temperature sensor (64) is an infrared temperature sensor.

14. Heating/bending/forming and heating/toasting device of barrels, casks, vats or the like (4) according to any one of preceding claims, wherein said heating/toasting means (12) comprise a base (68) above which the heat source for heating/toasting the barrel, cask, vat or the like (10) propagates, wherein the temperature sensor (64) is placed below the base (68) and integral therewith.

15. Heating/bending/forming and heating/toasting device of barrels, casks, vats or the like (4) according to claim 14, wherein said base (68) is provided with at least one window (72) at least partially aligned with said temperature sensor (64) to allow the crossing of the base (68) by a beam of infrared rays emitted by the inner side wall (16) of the staves (20), said beam being able to strike the temperature sensor (64).

16. Heating/bending/forming and heating/toasting device of barrels, casks, vats or the like (4) according to any one of preceding claims, wherein the temperature sensor (64) is associated with the heating/toasting means (12) by adjustable support means (76), so as to be able to vary the inclination of the temperature sensor (64) to strike appropriate portions of the staves (20).

17. Method of heating/bending/forming and heating/toasting barrels, casks, vats or the like (4) comprising the steps of:
- providing a wooden container for the refining, conditioning and ageing of food substances, such as a barrel, cask, vat or the like (10), said container comprising a plurality of staves (20) arranged side by side along the perimeter with each other to form a polyline closed at a first longitudinal end thereof (24),
- providing heating/toasting means (12) suitable to generate a source of heat to produce a heating and/or toasting of an inner side wall (16) of said staves (20),
- placing the container (10) above the heating/ toasting means (12) so as to have the closed polyline on the opposite side to the heating/toasting means (12) and free ends (36) of the staves (20) in the vicinity of the heating toasting means (12),
- providing bending/forming means (28) of said staves (20), which interface with the free ends (36) of said staves (20) opposite said first longitudinal ends (24), said bending/forming means pulling the staves (20) towards) a central axis of symmetry (S-S) of the barrel, cask, vat or the like (10),
- providing centering means (40) operatively connected to the heating/toasting means (12) and to the staves (20) of the barrel, cask, vat or the like (10), on the side of the free ends (36) of the staves (20) opposite, along a longitudinal extension axis, the first longitudinal ends (24),
- said centering means (40) comprising spacers (44) that guarantee the same distance (D)between an inner side wall (16) of the staves (20) and the heating/toasting means (12),
- arranging said spacers (44) so as to follow the deformations of the staves (20) during the bending thereof, continually bringing the heating/toasting means (12) to said central axis of symmetry (S-S) of the barrel, cask, vat and the like (10),
- providing at least one temperature sensor (64), integral with the heating/ toasting means (12), movable with these, during the bending step of the staves (20),
- directing said temperature sensor (64) towards a side wall (16) of the associated staves (20) in order to measure the surface temperature of the inner side wall (16) of the staves (20) at a distance.

18. Method of heating/bending/forming and heating/toasting barrels, casks, vats or the like according to claim 17, comprising the steps of:
associating the temperature sensor (64) with the heating/toasting means (12) by adjustable support means (76), so as to be able to vary the inclination of the temperature sensor (64) to strike appropriate portions of the staves (20).

## Patentansprüche

1. Erwärmungs-/Biege-/Form- und Erwärmungs-/Röst-Vorrichtung von Tonnen, Fässern, Bottichen und Ähnlichem (4), umfassend:
- Erwärmungs-/Röst-Mittel (12), geeignet zum Erzeugen von Wärme, um das Erwärmen und/oder das Rösten einer Innenseitenwand (16) eines Holzbehälters zum Altern von Lebensmittelsubstanzen zu erzeugen, wie z. B. eine Tonne, ein Fass, Bottich oder Ähnliches (10), wobei der Behälter eine Vielzahl Dauben (20), die Seite an Seite entlang des Umfangs angeordnet sind, um eine an einem ersten Längsende dessen geschlossene Polylinie (24) zu bilden, umfasst,
Biege-/Form-Mittel (28) der Dauben (20), geeignet, um freie Enden (36) der Dauben (20) gegenüber der ersten Längsenden (24) zu fassen, wobei die Biege-/Form-Mittel (28) die Dauben (20) zu einer zentralen Symmetrieachse (S-S) der Tonne, des Fasses, Bottichs oder Ähnlichem (10) ziehen,
**dadurch gekennzeichnet, dass**
- die Vorrichtung (4) Zentriermittel (40) umfasst, die wirkverbunden mit den Erwärmungs-/Röst-Mitteln (12) sind und geeignet sind, um mit den Dauben (20) der Tonne, des Fasses, Bottichs oder Ähnlichem (10) wirkverbunden gekoppelt zu werden, auf der Seite der freien Enden (36) der Dauben (20) gegenüber, entlang einer Längserstreckungsachse, der ersten Längsenden (24),
- wobei die Zentriermittel (40) die Erwärmungs-/Röst-Mittel (12) zu der zentralen Symmetrieachse (S-S) der Tonne, des Fasses, Bottichs oder Ähnlichem (10) bewegen,
wobei die Vorrichtung mindestens einen einstückig mit den Erwärmungs-/Röst-Mitteln (12) ausgebildeten Temperatursensor (64) umfasst, wobei der Temperatursensor (64) zu einer Seitenwand (16) der zugehörigen Dauben (20) ausgerichtet ist, um die Oberflächentemperatur der Innenseitenwand (16) der Dauben (20) in einem Abstand zu messen.

2. Erwärmungs-/Biege-/Form- und Erwärmungs-/Röst-Vorrichtung von Tonnen, Fässern, Bottichen und Ähnlichem (4) nach Anspruch 1, wobei die Zentriermittel (40) Abstandshalter (44) umfassen, die denselben Abstand zwischen einer Innenseitenwand (16) der Dauben (20), die den Erwärmungs-/Röst-Mitteln (12) zugewandt sind, und den Erwärmungs-/Röst-Mitteln (12) selbst sicherstellen.

3. Erwärmungs-/Biege-/Form- und Erwärmungs-/Röst-Vorrichtung von Tonnen, Fässern, Bottichen und Ähnlichem (4) nach Anspruch 2, wobei die Abstandshalter (44) einstellbar sind, um Verformungen der Dauben (20) während des Biegens derselben zu folgen, wobei kontinuierlich die Erwärmungs-/Röst-Mittel (12) zu der zentralen Symmetrieachse (S-S) der Tonne, des Fasses, Bottichs oder Ähnlichem (10) gebracht werden.

4. Erwärmungs-/Biege-/Form- und Erwärmungs-/Röst-Vorrichtung von Tonnen, Fässern, Bottichen und Ähnlichem (4) nach Anspruch 2 oder 3, wobei die Abstandshalter (44) elastische Abschnitte (48) umfassen, die geeignet sind, sich an das Biegen/die Verformung der Dauben (20) anzupassen, um den Abstand zwischen den Dauben (20) und den Erwärmungs-/Röst-Mitteln (12) zu verändern, wobei die Positionierung der Erwärmungs-/Röst-Mittel (12) an der zentralen Symmetrieachse (S-S) der Tonne, des Fasses, Bottichs oder Ähnlichem (10) sichergestellt wird.

5. Erwärmungs-/Biege-/Form- und Erwärmungs-/Röst-Vorrichtung von Tonnen, Fässern, Bottichen und Ähnlichem (4) nach Anspruch 2, 3 oder 4, wobei die Abstandshalter (44) konfiguriert sind, um zwischen den Erwärmungs-/Röst-Mitteln (12) und einer Innenseitenwand (16) der Dauben (20), die den Erwärmungs-/Röst-Mitteln (12) zugewandt sind, platziert zu werden.

6. Erwärmungs-/Biege-/Form- und Erwärmungs-/Röst-Vorrichtung von Tonnen, Fässern, Bottichen und Ähnlichem (4) nach Anspruch 2, 3 oder 4, wobei die Abstandshalter (44) auf der Seite einer Außenseitenwand (52) der Dauben (20), gegenüber den Erwärmungs-/Röst-Mitteln (12), platziert sind und wirkverbunden mit den Erwärmungs-/Röst-Mitteln (12) sind.

7. Erwärmungs-/Biege-/Form- und Erwärmungs-/Röst-Vorrichtung von Tonnen, Fässern, Bottichen und Ähnlichem (4) nach einem der Ansprüche 2 bis 6, wobei eine Verbindung zwischen den Abstandshaltern (44) und den Dauben (20) durch die Nutzung von Klammern (56) hergestellt wird, die an einer unteren Kante (60) der Dauben (20) auf der Seite der freien Enden (36) der Dauben (20) eingehakt sind, wobei die Klammern (56) in die untere Kante (60) einhaken, um eine Hinterschneidung in beide Richtungen auszuführen, weg von und hin zu der zentralen Symmetrieachse (S-S) der Tonne, des Fasses, Bottichs oder Ähnlichem (10), um jeder Bewegung der Dauben (20) zu folgen, sowohl bezüglich Ausdehnung als auch Zusammenziehung, unter der Einwirkung des Biege-/Form-Mittels (28).

8. Erwärmungs-/Biege-/Form- und Erwärmungs-/Röst-Vorrichtung von Tonnen, Fässern, Bottichen und Ähnlichem (4) nach einem der Ansprüche 2 bis 6, wobei eine Verbindung zwischen den Abstandshaltern (44) und den Dauben (20) durch die Nutzung von Klammern (56) hergestellt wird, die an einer Außenseitenwand (52) an der oberen Kante (24) der Dauben (20) eingehakt/befestigt sind, um jeder Bewegung der Dauben (20) zu folgen, sowohl bezüglich Ausdehnung als auch Zusammenziehung, unter der Einwirkung des Biege-/Form-Mittels (28).

9. Erwärmungs-/Biege-/Form- und Erwärmungs-/Röst-Vorrichtung von Tonnen, Fässern, Bottichen und Ähnlichem (4) nach einem der vorangehenden Ansprüche, wobei die Erwärmungs-/Röst-Mittel (12) mobil sind, um sich an die Verformung der Dauben (20) anzupassen.

10. Erwärmungs-/Biege-/Form- und Erwärmungs-/Röst-Vorrichtung von Tonnen, Fässern, Bottichen und Ähnlichem (4) nach Anspruch 9, wobei die Erwärmungs-/Röst-Mittel (12) mit Stützrädern auf einer Stützebene bereitgestellt werden, so dass sie unter den Schub der Zentriermittel (40) gezogen werden können.

11. Erwärmungs-/Biege-/Form- und Erwärmungs-/Röst-Vorrichtung von Tonnen, Fässern, Bottichen und Ähnlichem (4) nach einem der Ansprüche 2 bis 10, wobei die Abstandshalter (44) Federn und/oder einstellbare Kolben umfassen, die geeignet sind, die Positionierung der Erwärmungs-/Röst-Mittel (12) an der zentralen Symmetrieachse (S-S) der Tonne, des Fasses, Bottichs oder Ähnlichem (10) sicherzustellen.

12. Erwärmungs-/Biege-/Form- und Erwärmungs-/Röst-Vorrichtung von Tonnen, Fässern, Bottichen und Ähnlichem (4) nach einem der Ansprüche 2 bis 11, wobei die Zentriermittel (40) mindestens drei Abstandshalter (44) umfassen, die in gleichem Abstand voneinander in 120°-Winkeln zueinander platziert sind.

13. Erwärmungs-/Biege-/Form- und Erwärmungs-/Röst-Vorrichtung von Tonnen, Fässern, Bottichen und Ähnlichem (4) nach einem der vorangehenden Ansprüche, wobei der Temperatursensor (64) ein Infrarot-Temperatursensor ist.

14. Erwärmungs-/Biege-/Form- und Erwärmungs-/Röst-Vorrichtung von Tonnen, Fässern, Bottichen und Ähnlichem (4) nach einem der vorangehenden Ansprüche, wobei die Erwärmungs-/Röst-Mittel (12) einen Fuß (68) umfassen, über dem die Wärmequelle zum Erwärmen/Rösten der Tonnen, Fässer, Bottiche und Ähnlichem (10) sich verbreitet, wobei der Temperatursensor (64) unter dem Fuß (68) platziert sowie einstückig mit diesem ist.

15. Erwärmungs-/Biege-/Form- und Erwärmungs-/Röst-Vorrichtung von Tonnen, Fässern, Bottichen und Ähnlichem (4) nach Anspruch 14, wobei der Fuß (68) mit mindestens einem Fenster (72) versehen ist, das mindestens teilweise mit dem Temperatursensor (64) ausgerichtet ist bzw. fluchtet, um das Überqueren des Fußes (68) durch ein Bündel Infrarotstrahlen, die von der Innenseitenwand (16) der Dauben (20) emittiert werden, zu ermöglichen, wobei das Bündel den Temperatursensor (64) treffen kann.

16. Erwärmungs-/Biege-/Form- und Erwärmungs-/Röst-Vorrichtung von Tonnen, Fässern, Bottichen und Ähnlichem (4) nach einem der vorangehenden Ansprüche, wobei der Temperatursensor (64) mit den Erwärmungs-/Röst-Mitteln (12) durch einstellbare Stützmittel (76) verbunden ist, um dazu in der Lage zu sein, die Neigung des Temperatursensors (64) zu verändern, um passende Abschnitte der Dauben (20) zu treffen.

17. Verfahren des Erwärmens/Biegens/Formens und Erwärmens/Röstens von Tonnen, Fässern, Bottichen und Ähnlichem (4), umfassend die folgenden Schritte:
- Bereitstellen eines Holzbehälters zum Verfeinern, Veredeln bzw. Altern von Lebensmittelsubstanzen, wie z. B. eine Tonne, ein Fass, Bottich oder Ähnliches (10), wobei der Behälter eine Vielzahl Dauben (20), die Seite an Seite entlang des Umfangs angeordnet sind, um eine an einem ersten Längsende dessen geschlossene Polylinie (24) zu bilden, umfasst,
- Bereitstellen von Erwärmungs-/Röst-Mitteln (12), geeignet zum Erzeugen einer Wärmequelle, um ein Erwärmen und/oder Rösten einer Innenseitenwand (16) der Dauben (20) zu erzeugen,
- Platzieren des Behälters (10) über den Erwärmungs-/Röst-Mitteln (12), damit die geschlossene Polylinie sich auf der gegenüberliegenden Seite zu den Erwärmungs-/Röst-Mitteln (12) sowie freie Enden (36) der Dauben (20) sich in der Nähe der Erwärmungs-/Röst-Mittel (12) befinden,
- Bereitstellen von Biege-/Form-Mitteln (28) der Dauben (20), die mit den freien Enden (36) der Dauben (20) gegenüber den ersten Längsenden (24) in Verbindung stehen, wobei die Biege-/Form-Mittel die Dauben (20) zu einer zentralen Symmetrieachse (S-S) der Tonne, des Fasses, Bottichs oder Ähnlichem (10) ziehen,
- Bereitstellen von Zentriermitteln (40), die wirkverbunden mit den Erwärmungs-/Röst-Mitteln (12) und den Dauben (20) der Tonne, des Fasses, Bottichs oder Ähnlichem (10) sind, auf der Seite der freien Enden (36) der Dauben (20) gegenüber, entlang einer Längserstreckungsachse, der ersten Längsenden (24),
- wobei die Zentriermittel (40) Abstandshalter (44) umfassen, die denselben Abstand (D) zwischen einer Innenseitenwand (16) der Dauben (20) und den Erwärmungs-/Röst-Mitteln (12) sicherstellen,
- Anordnen der Abstandshalter (44), um Verformungen der Dauben (20) während des Biegens derselben zu folgen, wobei kontinuierlich die Erwärmungs-/Röst-Mittel (12) zu der zentralen Symmetrieachse (S-S) der Tonne, des Fasses, Bottichs oder Ähnlichem (10) gebracht werden,
- Bereitstellen mindestens eines Temperatursensor (64), der einstückig mit den Erwärmungs-/Röst-Mitteln (12) und mit diesen während des Biegeschritts der Dauben (20) beweglich ist,
- Ausrichten des Temperatursensors (64) zu einer Seitenwand (16) der zugehörigen Dauben (20), um die Oberflächentemperatur der Innenseitenwand (16) der Dauben (20) in einem Abstand zu messen.

18. Verfahren des Erwärmens/Biegens/Formens und Erwärmens/Röstens von Tonnen, Fässern, Bottichen und Ähnlichem (4) nach Anspruch 17, umfassend die folgenden Schritte:
Verbinden des Temperatursensors (64) mit den Erwärmungs-/Röst-Mitteln (12) durch einstellbare Stützmittel (76), um dazu in der Lage zu sein, die Neigung des Temperatursensors (64) zu verändern, um passende Abschnitte der Dauben (20) zu treffen.

## Revendications

1. Dispositif de chauffage / pliage / formage et de chauffage / brunissage de barils, fûts, cuves et produits analogues (4) comprenant :
- des moyens de chauffage / brunissage (12) adaptés pour générer de la chaleur et produire le chauffage et/ou brunissage d'une paroi latérale intérieure (16) d'un récipient en bois pour le vieillissement de substances alimentaires, tel qu'un baril, fût, cuve ou produit analogue (10), ledit récipient comprenant une pluralité de douves (20) agencées côte à côte le long du périmètre l'une avec l'autre pour former une polyligne fermée au niveau d'une première extrémité longitudinale de celui-ci (24),
- des moyens de pliage / formage (28) desdites douves (20) adaptés pour saisir des extrémités libres (36) desdites douves (20) opposées auxdites premières extrémités longitudinales (24), lesdits moyens de pliage / formage (28) tirant les douves (20) vers un axe de symétrie central (S-S) du baril, fût, cuve ou produit analogue (10),
**caractérisé en ce que**
- le dispositif (4) comprend des moyens de centrage (40) reliés fonctionnellement aux moyens de chauffage / brunissage (12) et adaptés pour être reliés fonctionnellement aux douves (20) du baril, fût, cuve ou produit analogue (10), sur le côté des extrémités libres (36) des douves (20) opposées, le long d'un axe d'extension longitudinale, aux premières extrémités longitudinales (24),
- lesdits moyens de centrage (40) déplaçant les moyens de chauffage / brunissage (12) vers ledit axe de symétrie central (S-S) du baril, fût, cuve ou produit analogue (10),
dans lequel le dispositif comprend au moins un capteur de température (64) intégré aux moyens de chauffage / brunissage (12), ledit capteur de température (64) étant dirigé vers une paroi latérale (16) des douves associées (20) afin de mesurer la température de surface de la paroi latérale intérieure (16) des douves (20) à une certaine distance.

2. Dispositif de chauffage / pliage / formage et de chauffage / brunissage de barils, fûts, cuves ou produits analogues (4) selon la revendication 1, dans lequel les moyens de centrage (40) comprennent des écarteurs (44) qui garantissent la même distance entre une paroi latérale intérieure (16) des douves (20), faisant face aux moyens de chauffage / brunissage (12), et les moyens de chauffage / brunissage (12) eux-mêmes.

3. Dispositif de chauffage / pliage / formage et de chauffage / brunissage de barils, fûts, cuves ou produits analogues (4) selon la revendication 2, dans lequel lesdits écarteurs (44) sont réglables de façon à suivre les déformations des douves (20) pendant leur pliage, amenant en continu les moyens de chauffage / brunissage (12) vers ledit axe de symétrie central (S-S) du baril, fût, cuve ou produit analogue (10).

4. Dispositif de chauffage / pliage / formage et de chauffage / brunissage de barils, fûts, cuves ou produits analogues (4) selon la revendication 2 ou 3, dans lequel lesdits écarteurs (44) comprennent des portions élastiques (48) appropriées pour s'adapter au pliage / à la déformation des douves (20) de façon à modifier la distance entre les douves (20) et les moyens de chauffage / brunissage (12), assurant le positionnement des moyens de chauffage / brunissage (12) au niveau dudit axe de symétrie central (S-S) du baril, fût, cuve ou produit analogue (10).

5. Dispositif de chauffage / pliage / formage et de chauffage / brunissage de barils, fûts, cuves ou produits analogues (4) selon la revendication 2, 3 ou 4, dans lequel lesdits écarteurs (44) sont configurés pour être placés entre les moyens de chauffage / brunissage (12) et une paroi latérale intérieure (16) des douves (20) faisant face aux moyens de chauffage / brunissage (12).

6. Dispositif de chauffage / pliage / formage et de chauffage / brunissage de barils, fûts, cuves ou produits analogues (4) selon la revendication 2, 3 ou 4, dans lequel lesdits écarteurs (44) sont placés sur le côté d'une paroi latérale extérieure (52) des douves (20), opposé aux moyens de chauffage / brunissage (12), et sont reliés fonctionnellement aux moyens de chauffage / brunissage (12).

7. Dispositif de chauffage / pliage / formage et de chauffage / brunissage de barils, fûts, cuves ou produits analogues (4) selon l'une quelconque des revendications 2 à 6, dans lequel une liaison entre les écarteurs (44) et les douves (20) est établie par l'utilisation de supports (56) accrochés à un bord inférieur (60) des douves (20) sur le côté des extrémités libres (36) des douves (20), dans lequel lesdits supports (56) s'accrochent audit bord inférieur (60) de façon à réaliser une contre-dépouille dans les deux directions, opposée à et vers l'axe central de symétrie (S-S) du baril, fût, cuve ou produit analogue (10), de façon à suivre chaque mouvement des douilles (20), à la fois en expansion et en contraction, sous l'effet des moyens de pliage / formage (28).

8. Dispositif de chauffage / pliage / formage et de chauffage / brunissage de barils, fûts, cuves ou produits analogues (4) selon l'une quelconque des revendications 2 à 6, dans lequel une liaison entre les écarteurs (44) et les douves (20) est établie par l'utilisation de supports (56) accrochés/attachés à une paroi latérale extérieure (52) vers le bord supérieur (24) des douves (20), de façon à suivre chaque mouvement des douilles (20), à la fois en expansion et en contraction, sous l'effet des moyens de pliage / formage (28).

9. Dispositif de chauffage / pliage / formage et de chauffage / brunissage de barils, fûts, cuves ou produits analogues (4) selon l'une quelconque des revendications précédentes, dans lequel les moyens de chauffage / brunissage (12) sont mobiles de façon à s'adapter à la déformation des douves (20).

10. Dispositif de chauffage / pliage / formage et de chauffage / brunissage de barils, fûts, cuves ou produits analogues (4) selon la revendication 9, dans lequel les moyens de chauffage / brunissage (12) sont munis de roues-support sur un plan de support, de sorte qu'ils peuvent être trainés sous la poussée des moyens de centrage (40).

11. Dispositif de chauffage / pliage / formage et de chauffage / brunissage de barils, fûts, cuves ou produits analogues (4) selon l'une quelconque des revendications 2 à 10, dans lequel lesdits écarteurs (44) comprennent des ressorts et/ou des pistons réglables adaptés pour assurer le positionnement des moyens de chauffage / brunissage (12) au niveau dudit axe de symétrie central (S-S) du baril, fût, cuve ou produit analogue (10).

12. Dispositif de chauffage / pliage / formage et de chauffage / brunissage de barils, fûts, cuves ou produits analogues (4) selon l'une quelconque des revendications 2 à 11, dans lequel les moyens de centrage (40) comprennent au moins trois écarteurs (44) placés de manière équidistante en formant de l'un à l'autre un angle de 120°.

13. Dispositif de chauffage / pliage / formage et de chauffage / brunissage de barils, fûts, cuves ou produits analogues (4) selon l'une quelconque des revendications précédentes, dans lequel ledit capteur de température (64) est un capteur de température infrarouge.

14. Dispositif de chauffage / pliage / formage et de chauffage / brunissage de barils, fûts, cuves ou produits analogues (4) selon l'une quelconque des revendications précédentes, dans lequel lesdits moyens de chauffage / brunissage (12) comprennent une base (68) au-dessus de laquelle se propage la source de chaleur pour le chauffage / brunissage du baril, fût, cuve ou produit analogue (10), le capteur de température (64) étant placé sous la base (68) et intégré à celle-ci.

15. Dispositif de chauffage / pliage / formage et de chauffage / brunissage de barils, fûts, cuves ou produits analogues (4) selon la revendication 14, dans lequel ladite base (68) est dotée d'au moins une fenêtre (72) alignée au moins en partie avec ledit capteur de température (64) pour permettre la traversée de la base (68) par un faisceau de rayons infrarouges émis par la paroi latérale intérieure (16) des douves (20), ledit faisceau étant capable de frapper le capteur de température (64).

16. Dispositif de chauffage / pliage / formage et de chauffage / brunissage de barils, fûts, cuves ou produits analogues (4) selon l'une quelconque des revendications précédentes, dans lequel le capteur de température (64) est associé aux moyens de chauffage / brunissage (12) par des moyens-support ajustables (76) de façon à pouvoir faire varier l'inclinaison du capteur de température (64) pour frapper des portions appropriées des douves (20).

17. Procédé de chauffage / pliage / formage et de chauffage / brunissage de barils, fûts, cuves et produits analogues (4), comprenant les étapes consistant à :
- fournir un récipient en bois pour le raffinage, le conditionnement et le vieillissement de substances alimentaires, tel qu'un baril, fût, cuve ou produit analogue (10), ledit récipient comprenant une pluralité de douves (20) agencées côte à côte le long du périmètre l'une avec l'autre pour former une polyligne fermée à une première extrémité longitudinale de celui-ci (24),
- fournir des moyens de chauffage / brunissage (12) adaptés pour générer une source de chaleur pour produire un chauffage et/ou brunissage d'une paroi latérale intérieure (16) desdites douves (20),
- placer le récipient (10) au-dessus des moyens de chauffage / brunissage (12) de façon à avoir la polyligne fermée sur le côté opposé aux moyens de chauffage / brunissage (12) et les extrémités libres (36) des douves (20) au voisinage des moyens de chauffage brunissage (12),
- fournir des moyens de pliage / formage (28) desdites douves (20), qui font interface avec les extrémités libres (36) desdites douves (20) opposées auxdites premières extrémités longitudinales (24), lesdits moyens de pliage / formage tirant les douves (20) vers un axe de symétrie central (S-S) du baril, fût, cuve ou produit analogue (10),
- fournir des moyens de centrage (40) reliés fonctionnellement aux moyens de chauffage / brunissage (12) et aux douves (20) du baril, fût, cuve ou produit analogue (10), sur le côté des extrémités libres (36) des douves (20) opposées, le long d'un axe d'extension longitudinale, aux premières extrémités longitudinales (24),
- lesdits moyens de centrage (40) comprenant des écarteurs (44) qui garantissent la même distance (D) entre une paroi latérale intérieure (16) des douves (20) et les moyens de chauffage / brunissage (12),
- agencer lesdits écarteurs (44) de façon à suivre les déformations des douves (20) pendant leur pliage, en amenant en continu les moyens de chauffage / brunissage (12) vers ledit axe de symétrie central (S-S) du baril, fût, cuve ou produit analogue (10),
- fournir au moins un capteur de température (64) intégré aux moyens de chauffage / brunissage (12) et mobile avec ceux-ci pendant l'étape de pliage des douves (20),
- diriger ledit capteur de température (64) vers une paroi latérale (16) des douves associées (20) afin de mesurer la température de surface de la paroi latérale intérieure (16) des douves (20) à une certaine distance.

18. Procédé de chauffage / pliage / formage et de chauffage / brunissage de barils, fûts, cuves et produits analogues (4) selon la revendication 17, comprenant l'étape consistant à :
associer le capteur de température (64) aux moyens de chauffage / brunissage (12) par des moyens-support ajustables (76) de façon à pouvoir faire varier l'inclinaison du capteur de température (64) pour frapper des portions appropriées des douves (20).
